# EUROPÄISCHE PATENTSCHRIFT

(11) **EP 3 971 118 B1**
(45) Veröffentlichungstag und Bekanntmachung des Hinweises auf die Patenterteilung: **20.03.2024**
(21) Anmeldenummer: 20197478.9
(22) Anmeldetag: 22.09.2020
(51) Int. Cl.: B65G 47/90

(54) **GREIFER FÜR KOMMISSIONIERVORRICHTUNG**
GRIPPER FOR PICKING DEVICE
PRÉHENSEUR POUR UN DISPOSITIF DE PRÉPARATION DE COMMANDES

(43) Veröffentlichungstag der Anmeldung: 23.03.2022
(73) Patentinhaber: Becton Dickinson Rowa Germany GmbH, 53539 Kelberg (DE)
(72) Erfinder: GROSS, Dietmar, 53539 Kelberg (DE)
(74) Vertreter: Zenz Patentanwälte Partnerschaft mbB

(56) Entgegenhaltungen:
- EP-A1- 3 431 421
- DE-A1-102011 010 557
- DE-A1-102014 117 291
- DE-B3-102006 009 559
- DE-B4-102014 117 291
- JP-A- 2006 168 786

## Beschreibung

Die vorliegende Erfindung betrifft einen Greifer zum Ein- und Auslagern von Kleinstückgütern, insbesondere Arzneimittelpackungen und Nahrungsergänzungsmittelpackungen, in eine bzw. aus einer Kommissioniervorrichtung.

Bei modernen Kommissioniervorrichtungen, wie sie häufig in Apotheken verwendet werden, wird eine große Anzahl verschiedener und unterschiedlich dimensionierter Kleinstückgütern, üblicherweise Arzneimittelpackungen und Nahrungsergänzungsmittelpackungen, chaotisch und platzoptimiert auf langgestreckten horizontalen Regalböden gelagert. Diese bilden zusammen mit Regalwänden eine Mehrzahl von Regalfächern, wobei pro Regalfach beziehungsweise Regalboden eine große Anzahl von Kleinstückgütern gelagert wird. Bei einer platzoptimierten chaotischen Lagerung werden die Kleinstückgüter derart auf Regalböden gelagert, dass eine möglichst große Anzahl von Kleinstückgütern pro Flächeneinheit eines Regalbodens gelagert werden kann, das heißt derart, dass möglichst wenig Freiraum auf einem Regalboden verbleibt.

Bei modernen Kommissioniervorrichtungen wird üblicherweise eine Mehrzahl von Kleinstückgütern (in Bezug auf die Ein- und Auslagerungsrichtung) hintereinander gelagert, wobei regelmäßig darauf geachtet wird, dass die Kleinstückgüter derart gelagert werden, dass diese aufgrund ihrer Dimensionen mit dem in der Kommissioniervorrichtung verwendeten Greifer derart gegriffen werden können, dass zumindest zwei Kleinstückgüter auf einmal von einem Regalboden auf einen Ablagetisch des Greifers bewegt werden können.

Ein aus dem Stand der Technik bekannter Greifertyp umfasst zwei langgestreckte, sich in Ein- und Auslagerungsrichtung (X-Richtung) erstreckende Greifbacken, von denen zumindest eine orthogonal zu der Ein- und Auslagerungsrichtung (in Y-Richtung) bewegbar ist. Die Greifbacken sind üblicherweise an einer Greifbackenführungsanordnung befestigt, wobei die Greifbackenführungsanordnung in Ein- und Auslagerungsrichtung bewegbar ist und die Bauteile zur Bewegung zumindest einer Greifbacke in Y-Richtung umfasst.

Üblicherweise ist zumindest eine der Greifbacken bei ihrem Befestigungsende an der Greifbackenführungsanordnung derart schwenkbar gelagert, dass der freie Endabschnitt der Greifbacke auf die andere Greifbacke zu bewegt werden kann. Mit einem entsprechend ausgebildeten Greifer können die Kleinstückgüter mit dem freien Endabschnitt der zumindest einen schwenkbaren Greifbacke geklemmt werden. In Abhängigkeit von der Anordnung des Kleinstückguts kann es auch vorgesehen sein, dieses zu hintergreifen, so dass das oder die auszulagernden Kleinstückgut/-güter nicht lediglich geklemmt werden, wie dies der Fall wäre, wenn zumindest eine Greifbacke lediglich in Y-Richtung verfahrbar ist.

Bei bekannten Greifern wird die Schwenkbewegung gegenüber dem freien Endabschnitt der Greifbacke (also bei dem Befestigungsende) initiiert, so dass nur eine gewisse Klemmkraft mit der zumindest einen schwenkbaren Greifbacke ausgeübt werden kann. Nachteilig ist bei den bekannten Greifern ferner, dass sich die geschwenkte Greifbacke aufgrund des Unterschiedes zwischen dem Ort, bei welchem die Schwenkung initiiert wird und dem "Angriffspunkt", bei dem oder den auszulagernden Stückgut/ -gütern, durchbiegt. Ein Greifer des Standes der Technik ist beispielsweise aus der EP3431421 A1 bekannt, die den Oberbegriff des Anspruchs 1 zeigt.

Es ist Aufgabe der vorliegenden Erfindung, einen Greifer für eine Kommissioniervorrichtung bereitzustellen, bei welchem mit zumindest einer schwenkbaren Greifbacke eine erhöhte Klemmkraft auf ein auszulagerndes Stückgut bereitgestellt werden kann.

Die Aufgabe der vorliegenden Erfindung wird gelöst durch einen Greifer zum Ein- und Auslagern von Kleinstückgütern in eine bzw. aus einer Kommissioniervorrichtung nach Patentanspruch 1. Der erfindungsgemäße Greifer umfasst einen sich in einer ersten horizontalen Richtung (X-Richtung) und einer zweiten horizontalen Richtung (Y-Richtung), orthogonal zur ersten horizontalen Richtung, erstreckenden Ablagetisch mit zumindest einer Ein- und Auslagerungsstirnseite, und zwei über dem Ablagetisch angeordnete langgestreckte, sich in X-Richtung erstreckende und an einer Greifbackenführungsanordnung befestigte Greifbacken, wobei beide Greifbacken in X-Richtung bewegbar sind und zumindest eine der Greifbacken in Y-Richtung bewegbar ist.

Erfindungsgemäß ist vorgesehen, dass zumindest eine der Greifbacken eine zumindest abschnittsweise elastische Längsführung mit einem der Greifbackenführungsanordnung abgewandten freien Endabschnitt und mit einem gegenüberliegenden Befestigungs-Endabschnitt sowie eine Greifbackensehne aufweist, die sich in einem ungespannten Zustand parallel entlang eines Abschnitts der elastischen Längsführung erstreckt, wobei ein erster Endabschnitt der Greifbackensehne bei dem freien Endabschnitt der elastischen Längsführung befestigt und ein zweiter Endabschnitt der Greifbackensehne derart mit einem bei dem Befestigungs-Endabschnitt angeordneten Zugmittel gekoppelt ist, dass die Greifbackensehne in X-Richtung bewegbar ist, wobei eine Bewegung der Greifbackensehne in X-Richtung eine Bewegung des freien Endabschnitts der elastischen Längsführung in Y-Richtung bewirkt.

Anders als dies bei bekannten Greifern der Fall ist, wird die Schwenkbewegung der Greifbacke nicht bei dem Befestigungs-Endabschnitt initiiert, sondern bei dem freien Endabschnitt über die Kopplung mit der Greifbackensehne. Die Bewegung der Greifbackensehne in X-Richtung "verkürzt" oder "verlängert" den Greifbackensehnenabschnitt zwischen den Endabschnitten der elastischen Längsführung. Aufgrund deren Elastizität wird eine Verkürzung in eine Schwenkbewegung umgesetzt, eine Verlängerung bewirkt ein Zurückschwenken in die Ursprungslage.

Bei dem erfindungsgemäßen Greifer können also größere Klemmkräfte ausgeübt werden, da die Greifbackensehne, deren Bewegung die Schwenk- oder Rückbewegung auslöst, bei dem freien Endabschnitt der elastischen Längsführung angreift. Üblicherweise wird ein auszulagerndes Kleinstückgut im Bereich des freien Endabschnitts hintergriffen/geklemmt, so dass die Kraft entscheidet, die in diesem Bereich übertragen werden kann. Auch ein Durchbiegen ist aufgrund des Angriffspunkts der Greifbackensehne bei dem feien Endabschnitt der elastischen Längsführung ausgeschlossen.

Die Erfindung kann bei Greifern verwendet werden, die die Kleinstückgüter über lediglich eine Ein- und Auslagerungsstirnseite ein- und auslagern, aber auch bei solchen, deren Ablagetisch zwei Ein- und Auslagerungsstirnseiten aufweist.

Ob sich die Greifbacke in Y-Richtung vom Greifer weg oder zu dessen sich in X-Richtung erstreckenden Längsachse hin bewegt/schwenkt, ist von der Anordnung der elastischen Längsführung und der Greifbackensehne bzw. deren Befestigung abhängig. Üblicherweise sind Kleinstückgüter so gelagert, dass ein Auslagern durch ein Bewegen der freien Endabschnitte aufeinander zu bewirkt wird. Bei einer bevorzugten Ausführungsform des erfindungsgemäßen Greifers ist es daher vorgesehen, dass zumindest eine Greifbackensehne zwischen einer elastischen Längsführung und einer gegenüberliegenden Greifbacke angeordnet ist, so dass eine durch das der Greifbackensehne zugeordnete Zugmittel auf eine Greifbackensehne ausgeübte Zugbewegung den freien Endabschnitt einer Greifbacke hin zu der gegenüberliegenden Greifbacke bewegt.

Um ein Kleinstückgut bzw. mehrere Kleinstückgüter sicher auszulagern, ist es bei einer bevorzugten Ausführungsform vorgesehen, dass der Greifer zwei Zugmittel aufweist und beide Greifbacken eine elastische Längsführung und eine Greifbackensehne aufweisen, wobei die Greifbackensehnen zwischen den elastischen Längsführungen angeordnet sind, so dass eine durch die Zugmittel auf die Greifbackensehnen ausgeübte Zugbewegung die freien Endabschnitte der Greifbacken aufeinander zu bewegt.

Wie genau die Bewegung der Greifbackensehne bewirkt wird, ist für die Erfindung nicht wesentlich. Beispielsweise kann eine Greifbackensehne mit einem Zugmittel gekoppelt sein, das als Linearantrieb ausgebildet ist. Alternativ könnte man die Greifbackensehne mit einem Seilzugmechanismus koppeln. Die vorgenannten Ausgestaltungen sind aber baulich relativ aufwendig. Bei einer konstruktiv einfachen bevorzugten Ausführungsform ist vorgesehen, dass ein Zugmittel als Hebeleinrichtung mit einem Kraftarm und mit einer Drehachse ausgebildet ist, wobei die Drehachse einen exzentrischen kreisförmigen Aufsatz aufweist, der in eine Öffnung bei dem zweiten Endabschnitt einer Greifbackensehne eingreift.

Eine Bewegung des Kraftarms in X-Richtung wird dabei in eine Drehbewegung der Drehachse umgesetzt. Indem ein exzentrischer Aufsatz in eine Öffnung bei dem zweiten Endabschnitt einer Greifsehne eingreift, bewirkt eine Drehung der Drehachse ein Verschieben des exzentrischen Aufsatzes in X-Richtung, was wiederrum eine Bewegung in der Greifbackensehne in X-Richtung und damit ein Verschwenken bewirkt.

Die Bewegung der Kraftarme in X-Richtung (und damit die Drehung der Drehachse) kann bewirkt werden, indem jeder Kraftarm mit einem getrennten Antrieb gekoppelt ist. Bei einer bevorzugten, konstruktiv sehr einfach gehaltenen Ausführungsform ist es aber vorgesehen, dass freie Enden der Kraftarme der Zugmittel in ein Langloch einer in X-Richtung bewegbaren Zugmittelbetätigung eingreifen.

Im Nachfolgenden wird eine bevorzugte Ausführungsform des erfindungsgemäßen Greifers unter Bezugnahme auf die beigefügte Zeichnung detaillierter beschrieben, in welcher
Figuren 1a und 1b Schrägansichten der bevorzugten Ausführungsform des Greifers zeigen, wobei bei Figur 1a die Greifbacken des Greifers geschwenkt sind,
Figuren 2a und 2b zwei Draufsichten auf die bevorzugte Ausführungsform zeigen, wobei bei Figur 2a die Greifbacken wiederum geschwenkt sind und bei Figur 2b eine Zugmittelbetätigungseinrichtung teilweise fortgelassen ist,
Figuren 3a und 3b Detailansichten des Befestigungsbereichs der Greifbacken zeigen,
Figuren 4a und 4b Detailansichten der Figuren 1a und 1b zeigen,
Figur 5 eine Detailansicht der Greifbackenführungsanordnung zeigt und
Figur 6 eine Detailansicht der geschwenkten Greifbacken zeigt.

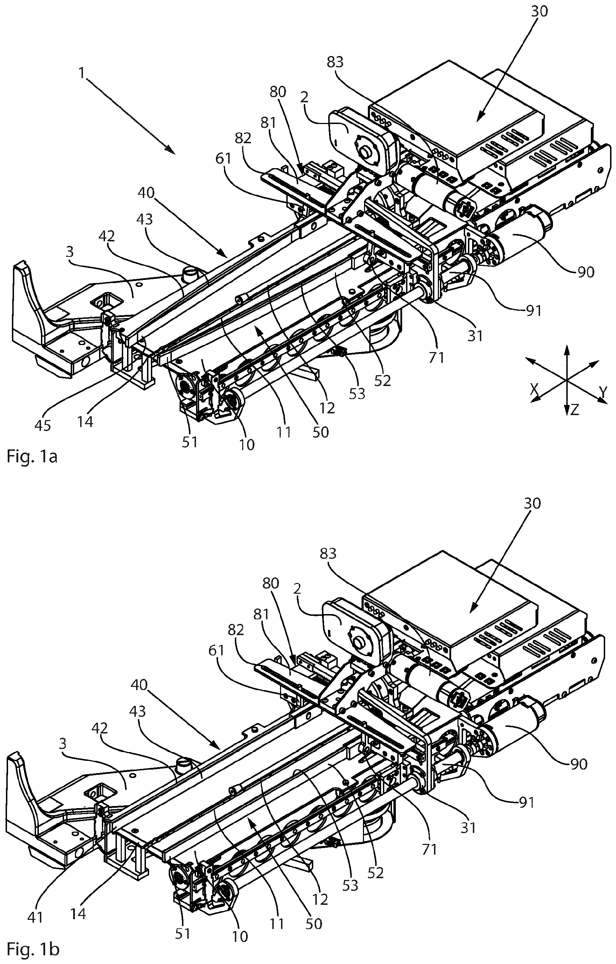

Figuren 1a und 1b zeigen Schrägansichten der bevorzugten Ausführungsform des erfindungsgemäßen Greifers 1. Der Greifer 1 umfasst einen sich in einer ersten horizontalen Richtung (Ein- und Auslagerungsrichtung, X-Richtung) und einer zweiten horizontalen Richtung (Y-Richtung), orthogonal zur ersten horizontalen Richtung, erstreckenden Ablagetisch 10 mit einer Ein- und Auslagerungsstirnseite 14. Über dem Ablagetisch 10 sind zwei langgestreckte, sich in X-Richtung erstreckende Greifbacken 40, 50 angeordnet, die an einer Greifbackenführungsanordnung 30 befestigt sind. Bei der gezeigten Ausführungsform sind die beiden Greifbacken 40, 50 in Y-Richtung bewegbar, wobei die Bewegungsmechanik unter Bezugnahme auf nachfolgende Figuren genauer beschrieben wird.

Der erfindungsgemäße Greifer umfasst ferner eine Zugmittelbetätigungseinrichtung 80 mit einer Zugmittelführung 81, die zwei Langlöcher 82 aufweist, in welche freie Enden von Kraftarmen 61, 71 von zwei Zugmitteln eingreifen. Die Zugmittel selbst sind, wie dies unter Bezugnahme auf nachfolgende Figuren genauer beschrieben wird, in Y-Richtung bewegbar und bewirken ein Verschwenken der Greifbacken 40, 50. Auf der Zugmittelbetätigungseinrichtung 80 ist bei der gezeigten Ausführungsform ein Sensor 2 angeordnet, mit welchem verschiedene Aspekte eines Ein- und Auslagerungsvorgangs überwacht werden.

Die beiden Greifbacken 40, 50 umfassen eine elastische Längsführung 42, 52 mit einem der Greifbackenführungsanordnung 30 abgewandten freien Endabschnitt 41, 51 und einem gegenüberliegenden Befestigungs-Endabschnitt 44, 54, über welchen die elastischen Längsführungen an Zugmitteln befestigt sind, deren genauer Aufbau und Funktionsweise unter Bezugnahme auf nachfolgende Figuren genauer beschrieben wird. Die beiden Greifbacken 40, 50 sind bei ihren freien Endabschnitten 41, 51 mit einem ersten Endabschnitt 45, 55 einer Greifbackensehne 43, 53 gekoppelt, welcher sich in dem in Figur 1b gezeigten nichtgeschwenkten Zustand der Greifbacken parallel zu den elastischen Längsführungen 42, 52 erstreckt. Die Greifbackensehnen 43, 53 sind darüber hinaus über einen zweiten Endabschnitt derart mit einem Zugmittel gekoppelt, dass die Greifbackensehnen in X-Richtung bewegbar sind. Eine solche Bewegung der Greifbackensehnen in X-Richtung bedingt eine Bewegung des freien Endabschnittes der zugehörigen elastischen Längsführung in Y-Richtung. Die Greifbackensehnen des erfindungsgemäßen Greifers krümmen die elastischen Längsführungen der Greifbacken nach dem Prinzip Bogen/Sehne, d. h. eine Verkürzung einer Greifbackensehne (entspricht einer Bewegung des zweiten Endabschnitts einer Greifbackensehne weg von dem freien Endabschnitt) bedingt ein Biegen der elastischen Längsführung, wobei diese Bewegung hier einfach als "Schwenken" bezeichnet wird. Da bei der gezeigten Ausführungsform die Greifbackensehnen "innen" in Bezug auf die elastischen Längsführungen angeordnet sind, bedingt die Bewegung der Greifbackensehnen in X-Richtung hin zu der Greifbackenführungsanordnung ein Verschwenken der freien Enden der elastischen Längsführungen aufeinander zu.

Anders als dies bei bekannten Greifern der Fall ist, wird das "Verschwenken" der freien Enden der Greifbacken also nicht bewirkt, indem mittels eines bei der Greifbackenführungsanordnung angeordneten Drehgelenks eine Schwenkbewegung der Greifbacken initiiert wird, sondern die Greifbackensehne greift bei dem der Greifbackenführungsanordnung gegenüberliegenden freien Endabschnitt der elastischen Längsführung an und sorgt durch die Bewegung in X-Richtung für eine Bewegung des freien Endabschnittes der Greifbacken. Bei alternativen Ausführungsformen des Greifers und in Abhängigkeit von der Art und Weise der Lagerung von Kleinstückgütern in der Kommissioniervorrichtung wäre es rein prinzipiell auch denkbar, dass die Greifbacken zum Auslagern von Kleinstückgütern "jeweils nach außen" bewegt bzw. geschwenkt werden.

Der in den Figuren 1a und 1b gezeigte Greifer umfasst eine sich in X-Richtung des Ablagetisches 10 erstreckende Ausnehmung 11, in welcher eine Schiebeeinrichtung 12 geführt ist, mittels welcher Kleinstückgüter von dem Ablagetisch auf einen Regalboden der Kommissioniervorrichtung bewegt werden können, und zwar über die Ein- und Auslagerungsstirnseite 14 des Ablagetisches 10. Der Antrieb der Schiebeeinrichtung ist unterhalb des Ablagetisches angeordnet und in den Figuren nicht veranschaulicht.

Der Greifer umfasst ferner einen seitlich zu der Greifbackenführungsanordnung 30 angeordneten Antrieb 90, mit welchem eine sich parallel zu dem Ablagetisch erstreckende Spindel 91 angetrieben werden kann, die wiederum mit einem Kopplungsmittel 31 der Greifbackenführungsanordnung 30 zusammenwirkt, so dass durch eine Drehbewegung der Spindel 91 die Greifbackenführungsanordnung in X-Richtung bewegbar ist.

Bei der gezeigten Ausführungsform ist die Zugmittelbetätigungseinrichtung 80 mit der Greifbackenführungsanordnung 30 gekoppelt, so dass die vorgenannte Drehbewegung auch die Zugmittelbetätigungseinrichtung 80 selbst in X-Richtung bewegt. Die Zugmittelbetätigungseinrichtung 80 umfasst einen Antrieb 83, mit welchem die Zugmittelführung 81 relativ zu der Greifbackenführungsanordnung 30 in X-Richtung bewegt werden kann. Wie genau die Bewegung der Zugmittelführung 81 eine Bewegung der Greifbackensehnen bewirkt, wird unter Bezugnahme auf nachfolgende Figuren detaillierter beschrieben.

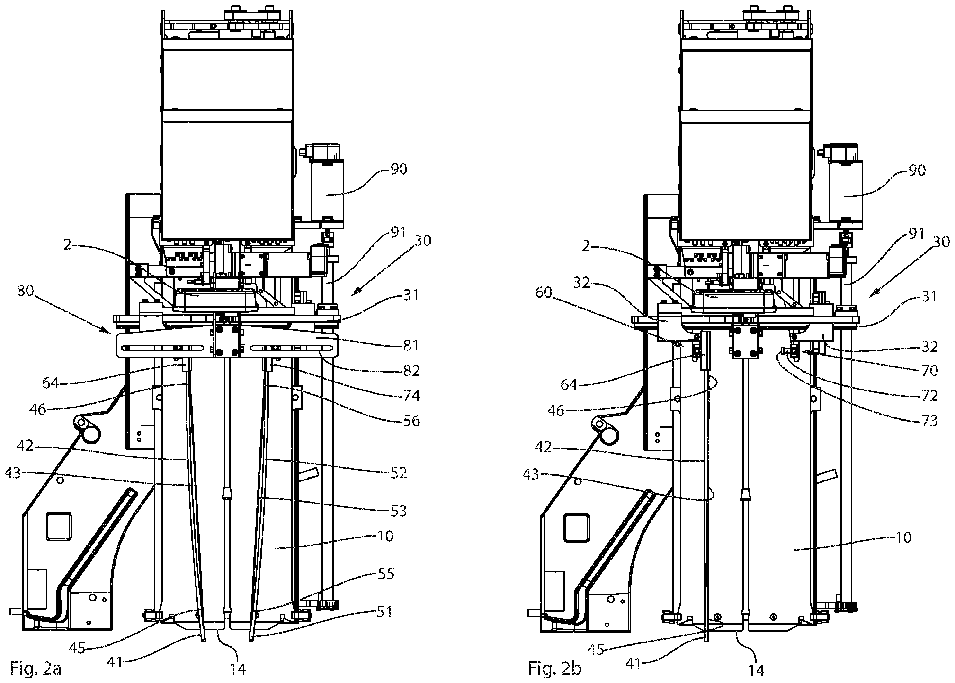

Figuren 2a und 2b zeigen Draufsichten auf die bevorzugte Ausführungsform des erfindungsgemäßen Greifers, wobei bei Figur 2a die beiden Greifbacken 40, 50 bei den freien Endabschnitten 41, 51 der elastischen Längsführungen aufeinander zu bewegt, d. h. verschwenkt, sind. Bei Figur 2b ist die Zugmittelbetätigungseinrichtung und die rechte Greifbacke fortgelassen, so dass ansatzweise bereits zu erkennen ist, wie eine Greifbacke an einem Zugmittel angeordnet ist.

Bei Figur 2a ist zu erkennen, dass die Schwenkbewegung bewirkt, dass sich die in dem nicht-verschwenkten Zustand (siehe Figur 2b) parallel erstreckenden Greifbackensehnen und elastischen Längsführungen voneinander "trennen", wobei diese Trennung abhängig von dem Grad der Verschwenkung der Greifbacken ist. Insbesondere in Figur 2a ist zu erkennen, dass die Greifbackensehnen 43, 53 bei ihrem ersten Endabschnitt 45, 55 jeweils mit dem freien Endabschnitt einer elastischen Längsführung gekoppelt sind. Bei einem zweiten Endabschnitt 46, 56 laufen die Greifbackensehnen in ein Führungsgehäuse 64, 74 eines Zugmittels ein, in welchem die zweiten Endabschnitte mit exzentrischen Aufsätzen auf den Drehachsen der Zugmittel gekoppelt sind. In den Führungsgehäusen sind ferner die elastischen Längsführungen befestigt.

Bei Figur 2b ist im rechten Teil der Figur (neben der Greifbacke als solcher) auch das Führungsgehäuse des Zugmittels fortgelassen, und es ist zu erkennen, dass das Zugmittel eine Drehachse 72 und einen kreisförmigen Aufsatz 73 umfasst, wobei die genaue Ausgestaltung unter Bezugnahme auf nachfolgende Figuren näher beschrieben ist.

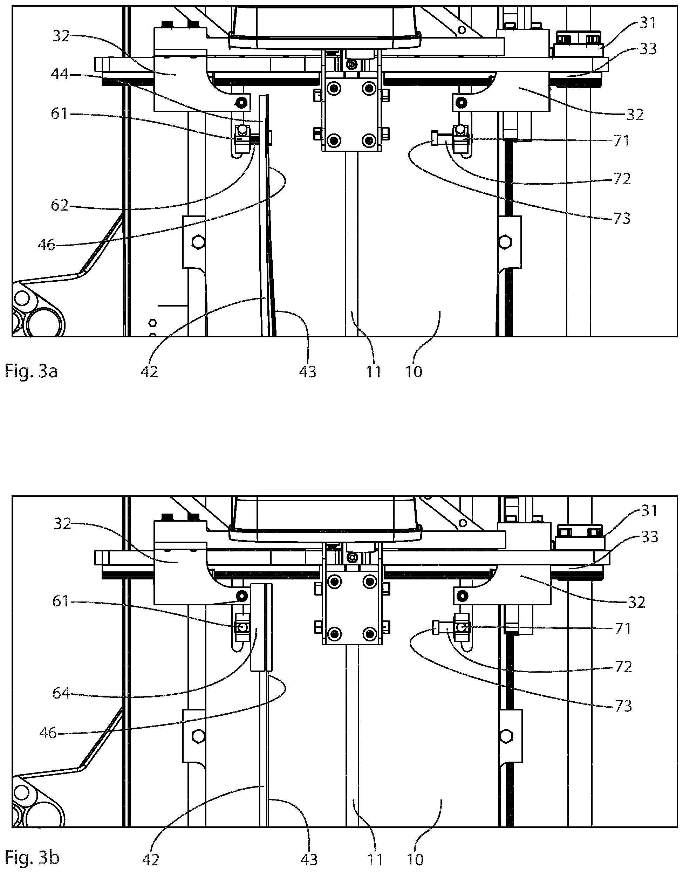

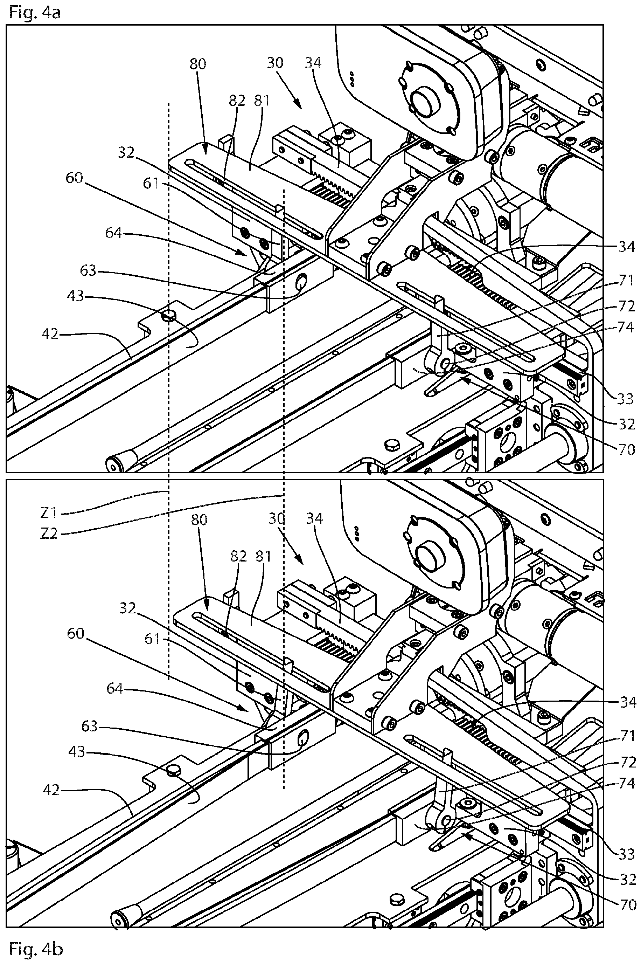

Figuren 3a und 3b zeigen Detailaufnahmen des Befestigungsbereiches der Greifbacken 40, 50 an den den Greifbacken zugeordneten Zugmitteln 60, 70 (von denen die Führungsgehäuse fortgelassen sind, um die inneren Bauteile der Führungsmittel besser zu veranschaulichen). Die Zugmittel, die insbesondere in den nachfolgenden Figuren 4a und 4b deutlich in einer Schrägansicht zu erkennen sind, sind über die nicht dargestellten Führungsgehäuse an Greifbackenschlitten 32 gekoppelt, die wiederum an eine Y-Führung 33 der Greifbackenführungsanordnung gekoppelt sind und für eine Bewegung der Greifbacken in Y-Richtung sorgen. Die Zugmittel selbst umfassen einen Kraftarm 61, 71, durch dessen Bewegung in X-Richtung eine Bewegung der Greifbackensehnen in X-Richtung und damit ein Verschwenken der Greifbacken bewirkt wird.

Bei Figur 3a sind die Greifbacken im geschwenkten Zustand dargestellt, bei Figur 3b im nicht-geschenkten Zustand. Bei einem Vergleich der Kraftarme 61, 71 der beiden Figuren ist zu erkennen, dass diese bei Figur 3a leicht schräg stehen, also leicht aus der Z-Achse hin zu den Greifbackenschlitten 32 bewegt sind - wie genau diese Bewegung initiiert wird, wird unter Bezugnahme auf die Figuren 4a und 4b beschrieben.

Auf der rechten Seite der Figur 3a ist zu erkennen, dass der kreisförmige Aufsatz 73 auf der Drehachse 72 des der rechten Greifbacke zugeordneten Greifmittels exzentrisch auf der Drehachse 72 angeordnet ist. Bei einem Vergleich der Figuren 3a und 3b ist zu erkennen, dass der Aufsatz in Figur 3a in X-Richtung weiter auf den Greifbackenschlitten gedreht ist. Da der Aufsatz 73 in eine kreisförmige Öffnung in dem zweiten Endabschnitt der Greifbackensehne eingreift, bewirkt ein Drehen der Drehachse von der Stellung in Figur 3b (nicht-verschwenkt) in die Stellung von Figur 3a (verschwenkte Greifbacken), dass die Greifbackensehne bei ihrem zweiten Endabschnitt in X-Richtung hin zu den Greifbackenschlitten bewegt wird, wobei diese Bewegung ein Verschwenken der freien Endabschnitte 41, 51 der elastischen Längsführungen aufeinander zu bedingt.

Figuren 4a und 4b zeigen Detail-Schrägansichten der bevorzugten Ausführungsform im Bereich der Befestigung der Greifbacken an den Zugmitteln 60, 70, wobei in Figur 4a der nicht-geschwenkte Zustand der Greifbacken und in Figur 4b der geschwenkte Zustand der Greifbacken veranschaulicht ist. Um insbesondere die unterschiedliche Stellung der Zugmittelführung 81 sowie der Kraftarme 61, 71 der Zugmittel 60, 70 zu veranschaulichen, sind die Figuren 4a und 4b sehr nah aneinander angeordnet und es sind zwei vertikal gestrichelte Linien Z1, Z2 durch beide Figuren geführt.

Wie dies bei einem Vergleich der Kraftarme 61, 71 und der Zugmittelführung 81 zu erkennen ist, ist die Zugmittelführung 81 in Figur 4b weiter nach "hinten", weg von der Ein- und Auslagerungsstirnseite des Ablagetisches, bewegt. Durch diese Bewegung nach hinten wird durch die Kraftarme 61, 71 in Kombination mit den Drehachsen die Linearbewegung der Zugmittelführung 81 in eine Drehbewegung der Drehachsen umgewandelt. Da an den Drehachsen exzentrische Aufsätze 63, 73 angeordnet sind, bewirkt die Drehbewegung der Drehachse wiederrum eine Bewegung der Greifbackensehnen in X-Richtung.

Wie dies bei den vorherigen Figuren zu erkennen war, umfassen auch die elastischen Längsführungen im Befestigungsbereich eine kreisförmige Öffnung, durch die jeweils eine Drehachse der Zugmittel verläuft. Da diese Drehachse aber nicht exzentrisch ausgebildet ist, bewirkt deren Drehung keine Verschiebung der elastischen Längsführungen. Das Drehen der Drehachsen bewirkt aufgrund der exzentrischen Aufsätze also eine Relativbewegung der Greifbackensehen zu den elastischen Längsführungen.

Bei einem Vergleich der mit der vertikalen Linie Z2 "verbundenen" freien Enden der Kraftarme 61, 71 ist ebenfalls zu erkennen, dass auch diese in der Darstellung der Figur 4b weiter nach "hinten" bewegt sind.

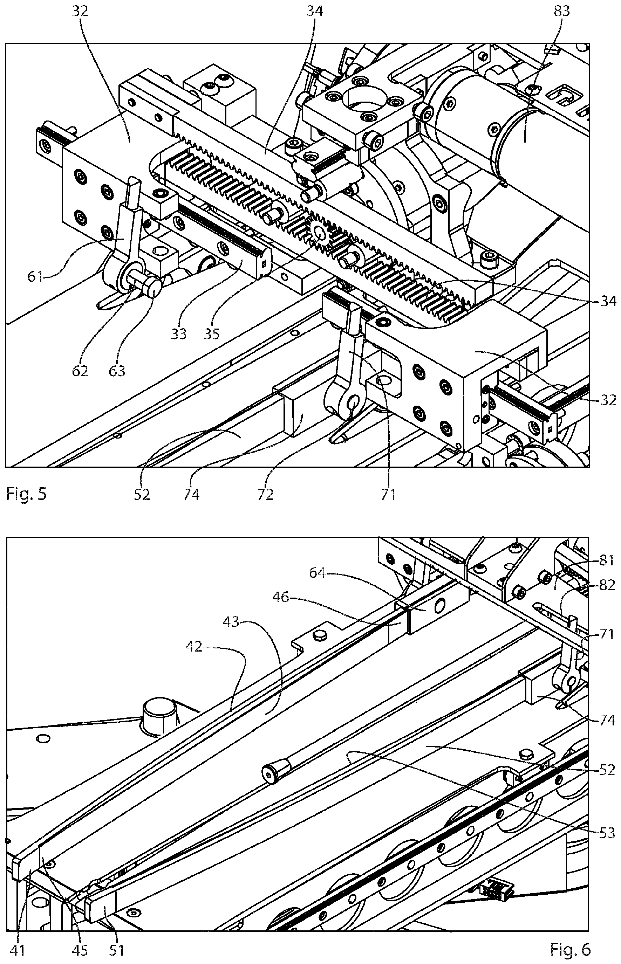

Figur 5 zeigt eine Detailansicht der Greifbackenführungsanordnung, wobei bei dieser Figur u. a. die Zugmittelführung fortgelassen ist, um die inneren Bauteile der Greifbackenführungsanordnung zu veranschaulichen, und zwar insbesondere die Bewegungsmechanik der Greifbackenschlitten 32. Die Greifbackenführungsanordnung 30 umfasst bei der gezeigten Ausführungsform eine zweiteilige Y-Führung 33, auf der jeweils ein Greifbackenschlitten 32 aufsitzt. Jeder Greifbackenschlitten ist mit einem als Zahnstange ausgebildeten Führungsmittel 34 gekoppelt, wobei diese so angeordnet sind, dass die Zahnflächen der beiden Führungsmittel gegenüberliegen und sich in weiten Bereichen überlappen. Horizontal und vertikal zwischen den Führungsmitteln 34 ist ein Zahnrad 35 angeordnet und wirkt mit den Zahnflächen der Führungsmittel derart zusammen, dass ein Drehen des Zahnrads ein symmetrisches Bewegen der Führungsmittel und damit der Greifbackenschlitten auf der Y-Führung bewirkt. Aufgrund dieser Ausgestaltung ist lediglich ein Antrieb zum Bewegen der beiden Greifbackenschlitten notwendig; jedoch bedingt dies auch, dass die beiden Greifbackenschlitten nur synchron bewegbar sind.

Figur 6 zeigt eine Detailansicht der geschwenkten Greifbacken. Bei Figur 6 ist insbesondere zu erkennen, dass die Greifbackensehnen nicht als eine Art Seil, sondern als ein länglicher Streifen ausgebildet sind - dies bedingt eine bessere Anlage an einem auszulagernden Kleinstückgut, sollten die Greifbacken im Bereich der Greifbackensehnen anliegen. Ferner ist noch einmal zu erkennen, dass sich die Greifbackensehnen 43, 53 beim Schwenken von den elastischen Längsführungen 42, 52 "trennen" und so ein Zwischenraum zwischen diesen entsteht.

## Patentansprüche

1. Greifer (1) zum Ein- und Auslagern von Kleinstückgütern in eine bzw. aus einer Kommissioniervorrichtung, aufweisend:
einen sich in einer ersten horizontalen Richtung (X-Richtung) und einer zweiten horizontalen Richtung (Y-Richtung), orthogonal zur ersten horizontalen Richtung, erstreckenden Ablagetisch (10) mit mindestens einer Ein- und Auslagerungsstirnseite (14),
zwei über dem Ablagetisch (10) angeordnete langgestreckte, sich in X-Richtung erstreckende und an einer Greifbackenführungsanordnung (30) befestigte Greifbacken (40, 50), wobei beide Greifbacken (40, 50) in X-Richtung bewegbar sind und zumindest eine der Greifbacken in Y-Richtung bewegbar ist,
**dadurch gekennzeichnet, dass**
zumindest eine der Greifbacken (40, 50) eine zumindest abschnittsweise elastische Längsführung (42, 52) mit einem der Greifbackenführungsanordnung (30) abgewandten freien Endabschnitt (41, 51) und einem gegenüberliegenden Befestigungs-Endabschnitt (44, 54) sowie eine Greifbackensehne (43, 53) aufweist, die sich in einem ungespannten Zustand parallel entlang eines Abschnitts der elastischen Längsführung (42, 52) erstreckt,
wobei ein erster Endabschnitt (45, 55) der Greifbackensehne (43, 53) bei dem freien Endabschnitt (41, 51) der elastischen Längsführung befestigt ist und ein zweiter Endabschnitt (46, 56) der Greifbackensehne (43, 53) derart mit einem bei dem Befestigungs-Endabschnitt (44, 54) angeordneten Zugmittel (60, 70) gekoppelt ist, dass die Greifbackensehne (43, 53) in X-Richtung bewegbar ist, wobei eine Bewegung der Greifbackensehne (43, 53) in X-Richtung eine Bewegung des freien Endabschnitts (41, 51) der elastischen Längsführung (42, 52) in Y-Richtung bewirkt.

2. Greifer (1) zum Ein- und Auslagern von Kleinstückgütern in eine bzw. aus einer Kommissioniervorrichtung nach Anspruch 1, **dadurch gekennzeichnet, dass** zumindest eine Greifbackensehne (43, 53) zwischen einer elastischen Längsführung (42, 52) und einer gegenüberliegenden Greifbacke (50, 40) angeordnet ist, so dass eine durch das der Greifbackensehne zugeordnete Zugmittel (60, 70) auf die Greifbackensehne (43, 53) ausgeübte Zugbewegung den freien Endabschnitt (41, 51) der Greifbacke (40, 50) hin zu der gegenüberliegenden Greifbacke (50, 40) bewegt.

3. Greifer (1) zum Ein- und Auslagern von Kleinstückgütern in eine bzw. aus einer Kommissioniervorrichtung nach Anspruch 1, **dadurch gekennzeichnet, dass** der Greifer zwei Zugmittel (60, 70) aufweist und beide Greifbacken (40, 50) eine elastische Längsführung (42, 52) und eine Greifbackensehne (43, 53) aufweisen, wobei die Greifbackensehnen (43, 53) zwischen den elastischen Längsführungen (42, 52) angeordnet sind, so dass eine durch die Zugmittel (60, 70) auf die Greifbackensehnen (43, 53) ausgeübte Zugbewegung die freien Endabschnitte (41, 51) der Greifbacken aufeinander zu bewegt.

4. Greifer (1) zum Ein- und Auslagern von Kleinstückgütern in eine bzw. aus einer Kommissioniervorrichtung nach einem der Ansprüche 1 - 3, **dadurch gekennzeichnet, dass** ein Zugmittel (60, 70) als Hebeleinrichtung mit einem Kraftarm (61, 71) und mit einer Drehachse (62, 72) ausgebildet ist, wobei die Drehachse (62, 72) einen exzentrischen kreisförmigen Aufsatz (63, 73) aufweist, der in eine Öffnung (47, 57) bei dem zweiten Endabschnitt (46, 56) einer Greifbackensehne (43, 53) eingreift.

5. Greifer (1) zum Ein- und Auslagern von Kleinstückgütern in eine bzw. aus einer Kommissioniervorrichtung nach Anspruch 3 und 4, **dadurch gekennzeichnet, dass** ein freies Ende der Kraftarme (61, 71) der Zugmittel (60, 70) jeweils in ein Langloch (82) einer in X-Richtung bewegbaren Zugmittelbetätigungseinrichtung (80) eingreift.

## Claims

1. A gripper (1) for storing and retrieving small piece goods into or from a picking apparatus, having:
a delivery table (10) extending in a first horizontal direction (X direction) and a second horizontal direction (Y direction) which is orthogonal to the first horizontal direction, having at least one storage and retrieval end face (14),
two elongate gripping jaws (40, 50) arranged above the delivery table (10), extending in the X direction and fixed to a gripping jaw guide arrangement (30), both gripping jaws (40, 50) being movable in the X direction, and at least one of the gripping jaws being movable in the Y direction,
**characterized in that**
at least one of the gripping jaws (40, 50) has an at least partially elastic longitudinal guide (42, 52) with a free end portion (41, 51) facing away from the gripping jaw guide arrangement (30), and an opposite fastening end portion (44, 54), as well as a gripping jaw cord (43, 53) which extends in an untensioned state in parallel along a portion of the elastic longitudinal guide (42, 52),
wherein a first end portion (45, 55) of the gripping jaw cord (43, 53) is fastened to the free end portion (41, 51) of the elastic longitudinal guide, and a second end portion (46, 56) of the gripping jaw cord (43, 53) is coupled to a traction means (60, 70) arranged on the fastening end portion (44, 54) in such a manner that the gripping jaw cord (43, 53) can be moved in the X direction, wherein a movement of the gripping jaw cord (43, 53) in the X direction causes a movement of the free end portion (41, 51) of the elastic longitudinal guide (42, 52) in the Y direction.

2. The gripper (1) for storing and retrieving small piece goods into or from a picking apparatus, according to claim 1, **characterized in that** at least one gripping jaw cord (43, 53) is arranged between an elastic longitudinal guide (42, 52) and an opposite gripping jaw (50, 40), such that a pulling movement exerted on the gripping jaw cord (43, 53) by the traction means (60, 70) assigned to the gripping jaw cord moves the free end portion (41, 51) of the gripping jaw (40, 50) towards the opposite gripping jaw (50, 40).

3. The gripper (1) for storing and retrieving small piece goods into or from a picking apparatus, according to claim 1, **characterized in that** the gripper has two traction means (60, 70) and both gripping jaws (40, 50) have an elastic longitudinal guide (42, 52) and a gripping jaw cord (43, 53), the gripping jaw cords (43, 53) being arranged between the elastic longitudinal guides (42, 52) so that a pulling movement exerted on the gripping jaw cords (43, 53) by the traction means (60, 70) moves the free end portions (41, 51) of the gripping jaws toward each other.

4. The gripper (1) for storing and retrieving small piece goods into or from a picking apparatus, according to any of claims 1 to 3, **characterized in that** a traction means (60, 70) is designed as a lever device with a force arm (61, 71) and with a rotary axle (62, 72), the rotary axle (62, 72) having an eccentric circular attachment (63, 73) which engages in an opening (47, 57) at the second end portion (46, 56) of a gripping jaw cord (43, 53).

5. The gripper (1) for storing and retrieving small piece goods into or from a picking apparatus, according to claims 3 and 4, **characterized in that** each of the free ends of the force arm (61, 71) of the traction means (60, 70) in each case engages in an elongated hole (82) of a traction means actuating device (80) which can be moved in the X direction.

## Revendications

1. Préhenseur (1) pour le stockage et le déstockage de petites marchandises dans ou hors d'un dispositif de préparation de commandes, comprenant :
une table de dépôt (10) s'étendant dans une première direction horizontale (direction X) et une deuxième direction horizontale (direction Y), orthogonale à la première direction horizontale, avec au moins une face frontale de stockage et de déstockage (14),
deux mâchoires de préhension (40, 50) allongées, disposées au-dessus de la table de dépôt (10), s'étendant dans la direction X et fixées à un dispositif de guidage de mâchoires de préhension (30), les deux mâchoires de préhension (40, 50) étant mobiles dans la direction X et au moins une des mâchoires de préhension étant mobile dans la direction Y,
**caractérisé en ce que**
au moins l'une des mâchoires de préhension (40, 50) présente un guidage longitudinal (42, 52) élastique au moins par sections, avec une section d'extrémité libre (41, 51) opposée à le dispositif de guidage de mâchoires de préhension (30) et une section d'extrémité de fixation (44, 54) opposée, ainsi qu'une corde de mâchoire de préhension (43, 53) qui, dans un état non tendu, s'étend parallèlement le long d'une section du guidage longitudinal élastique (42, 52),
dans lequel une première partie d'extrémité (45, 55) de la corde de mâchoire de préhension (43, 53) est fixée à la section d'extrémité libre (41, 51) du guidage longitudinal élastique et une deuxième partie d'extrémité (46, 56) de la corde de mâchoire de préhension (43, 53) est reliée à un moyen de traction (60, 70) situé à la section d'extrémité de fixation (44, 54), de sorte que la corde de mâchoire de préhension (43, 53) est mobile dans la direction X, un mouvement de la corde de mâchoire de préhension (43, 53) dans la direction X provoquant un mouvement de la section d'extrémité libre (41, 51) du guidage longitudinal élastique (42, 52) dans la direction Y.

2. Préhenseur (1) pour le stockage et le déstockage de petites marchandises dans ou hors d'un dispositif de préparation de commandes selon la revendication 1, **caractérisé en ce qu'**au moins une corde de mâchoire de préhension (43, 53) est disposée entre un guidage longitudinal élastique (42, 52) et une mâchoire de préhension opposée (50, 40), de sorte qu'un mouvement de traction exercé sur la corde de mâchoire de préhension (43, 53) par le moyen de traction (60, 70) associé à la corde de mâchoire de préhension déplace la section d'extrémité libre (41, 51) de la mâchoire de préhension (40, 50) vers la mâchoire de préhension opposée (50, 40).

3. Préhenseur (1) pour le stockage et le déstockage de petites marchandises dans ou hors d'un dispositif de préparation de commandes selon la revendication 1, **caractérisé en ce que** le préhenseur présente deux moyens de traction (60, 70) et les deux mâchoires de préhension (40, 50) présentent un guidage longitudinal élastique (42, 52) et une corde de mâchoire de préhension (43, 53), les cordes de mâchoire de préhension (43, 53) sont disposés entre les guidages longitudinaux élastiques (42, 52), de sorte qu'un mouvement de traction exercé par les moyens de traction (60, 70) sur les mâchoires de préhension (43, 53) déplace les sections d'extrémité libres (41, 51) des mâchoires de préhension l'une vers l'autre.

4. Préhenseur (1) pour le stockage et le déstockage de petites marchandises dans ou hors d'un dispositif de préparation de commandes selon l'une des revendications 1 à 3, **caractérisé en ce qu'**un moyen de traction (60, 70) est conçu comme un dispositif de levage avec un bras de force (61, 71) et avec un axe de rotation (62, 72), l'axe de rotation (62, 72) présentant un embout circulaire excentrique (63, 73) qui s'engage dans une ouverture (47, 57) au niveau de la deuxième partie d'extrémité (46, 56) d'une corde de mâchoire de préhension (43, 53).

5. Préhenseur (1) pour le stockage et le déstockage de petites marchandises dans ou hors d'un dispositif de préparation de commandes selon les revendications 3 et 4, **caractérisée en ce qu'**une extrémité libre des bras de force (61, 71) des moyens de traction (60, 70) s'engage respectivement dans un trou oblong (82) d'un dispositif d'actionnement de moyens de traction (80) mobile dans la direction X.
